# EUROPEAN PATENT APPLICATION

(11) **EP 4 640 064 A1**
(43) Date of publication of application: **29.10.2025**
(21) Application number: 24172049.9
(22) Date of filing: 24.04.2024
(51) Int. Cl.: A22C 25/12

(54) **HANDLING SYSTEM FOR HANDLING FISH, FISH PROCESSING SYSTEM, AND METHOD OF HANDLING FISH**

(71) Applicant: Marel Iceland EHF, 210 Gardabaer (IS)
(72) Inventor: SÆMUNDSSON, Kristján Finnur, IS-210 Gardabaer (IS); GRÉTARSSON, Unnsteinn, IS-210 Gardabaer (IS); INDRIÐASON, Magnús, IS-210 Gardabaer (IS)
(74) Representative: Vossius & Partner Patentanwälte Rechtsanwälte mbB

(57) **Abstract**

The present invention relates to a handling system (10) for handling fish (11), including a support structure (12) along which the fish is moveable. The support structure (12) is configured to support the fish, as the fish is moving along the support structure (12). The handling system (10) includes an opening (14) configured to allow the fish (11) to pass through the opening (14) to be dropped from a first location on the support structure (12) to a second location, and at least one deflection device (18) which is movable between a first position and a second position. In the first position, the deflection device (18) extends into the opening (14) to apply a force to the fish (11) to cause the fish (11) to rotate. In the second position, the deflection device (18) is moved away from the opening (14) to allow the fish (11) to pass through the opening (14) to the second location without being rotated.

The present invention further relates to a fish processing system and a method of handling fish.

## Description

Food items, in particular agricultural products, such as meat, poultry, fish, and plant-based products, are commonly processed in one or more processing steps at one or more processing stations before being offered to consumers. The food items are typically handled by various handling devices or systems prior to, during and/or after each processing step, or at least some of the processing steps.

Since processing and handling food items manually is labor- and/or time-intensive, the processing and/or handling of food items has largely been automated in order to increase efficiency and reduce costs.

Such automated processing and handling of food items may include receiving and sorting the whole food items, such as whole fish. Further steps may include gutting, de-heading, filleting and skinning the food items, e.g., the fish, in various processing and handling steps.

The food items may be handled prior to, i.e., upstream from, a respective processing station, during processing at a respective processing station, and/or after, i.e., downstream from, a respective processing station.

It may be desirable to arrange the food items in a particular orientation, e.g., priorto supplying the food items to one or more handling stations and/or one or more processing stations. Since at least most food items are not symmetrical, it may be desired and/or required to alter the food items' orientation, e.g., by flipping the food items.

The prior art has proposed some devices for altering an orientation of food items, e.g., fish. For instance, US 2020/120944 A1 discloses an apparatus for aligning fish uniformly with respect to their ventral/dorsal position. The apparatus includes a guide roller for transversely positioning the fish in a feed-in channel.

However, the devices known from the prior art have several drawbacks. For instance, at least some of the devices known from the prior art may not be applicable to or employable for different types and/or different sizes of food items, in particular different types of fish, and/or for one or more certain types and/or one or more certain sizes of food items, in particular salmon.

Moreover, at least some of the devices known from the prior art lack consistency and/or reliability in altering an orientation of the respective food items, in particular fish, to a desired and/or target orientation.

Furthermore, at least some of the devices known from the prior art have a relatively complex configuration, e.g., including a relatively large number of moving and/or driven components, and/or a relatively large configuration, e.g., a relatively large volume and/or mass, and/or a relatively large footprint. This may increase the space required for the device and/or may reduce the efficiency of the device, e.g., with respect to the power required to operate the respective device.

The prior art has not or at least not sufficiently addressed the matters described above.

Thus, it is an object of the present invention to provide a simple, effective, and/or reliable handling means for handling food items, in particular for flipping food items, in particular fish, in particular salmon.

This object is achieved by a handling system defined by the features of claim 1. Variations and further developments are defined by the features of the dependent claims.

The handling system may be configured for handling fish, preferably whole fish. The handling system may include at least one support structure along which at least one fish is moveable. The support structure may be configured to support the fish, as the fish is/are moving along the support structure and/or when the fish is/are resting on the support structure in a stationary manner. The handling system may include at least one opening defined in the support structure and configured to allow the fish to pass through the opening to be dropped from a first location on the support structure to a second location. In other words, the handling system may allow the fish to be dropped through the opening, i.e., with the aid of gravitational forces, from the first location to the second location, the first location being arranged higher than the second location. Thus, the handling system may be configured as or may include a drop station which includes the opening through which the fish is/are dropped. The second location may be arranged on a further support structure, e.g., a conveyor and/or a chute, e.g., to transport the fish to a further station, e.g., a processing station.

The handling system may include at least one deflection device which may be movable between a first position and at least a second position. In the first position, the deflection device may extend partially into the opening, preferably to apply at least one force to the fish, to deflect at least a portion of the fish to cause the fish to rotate about a longitudinal axis of the fish, at least partially while the fish is dropping from the first location to the second location. In the second position, the deflection device may be at least partially moved away from the opening to allow the fish to pass through the opening to the second location without being rotated. In other words, the deflection device may be configured such that the fish impacts the deflecting device, before and/or while the fish is being dropped from the first location to the second location, which causes the fish to rotate about a longitudinal axis of the fish.

Thus, the handling system may cause rotation of the fish, about the longitudinal axis of the fish, by arranging/extending the deflection device at least partially in the opening to cause physical interaction between the deflection device and the fish, at least while the fish is being dropped from the first location to the second location, and optionally also before the fish is being dropped from the first location to the second location and/or after the fish has been dropped from the first location to the second location. The physical interaction between the deflection device and the fish deflects at least a portion of the fish to cause the fish to rotate about the longitudinal axis of the fish. The deflection device may be configured to be stationary, i.e., passive or non-moving, while the deflection device interacts with the fish, i.e., applies at least one force to the fish, to deflect at least a portion of the fish to cause the fish to rotate about the longitudinal axis of the fish. In other words, the force applied to the fish may be initiated and/or caused by a weight of the fish itself which is imparted onto the deflection device. Hence, the use of power, e.g., to drive an apparatus for applying a force to the fish, such as the guide roller disclosed in US 2020/120944 A1, for rotating the fish may be reduced and/or minimized and/or completely eliminated.

This may provide a relatively simple, effective, space-efficient, compact and/or reliable handling means for handling food items, in particular fish, in particular salmon.

Moreover, combining the dropping of the fish through the opening from the first location to the second location, e.g., to transfer the fish from the support structure to a further support structure and/or a conveyor, which may be employed in an existing system, may allow the handling system to be combined with a further function, i.e., transferring the fish from the first location to the second location, where the fish may be transported and/or processed, further, by dropping the fish through the opening. This may provide a compact and/or space-efficient system.

Configuring the handling system such that the deflection device is movable between the first position, in which the deflection device may extend partially into the opening to rotate the fish, and the second position, in which the deflection device may be at least partially moved away from the opening to allow the fish to pass through the opening to the second location without being rotated, may allow the handling system to selectively rotate the fish, i.e., on demand. In other words, the fish may be allowed to pass through the opening without rotating the fish, e.g., when the fish is already a correct and/or desired orientation, by arranging or moving the deflection device in or into the second position in a relatively simple manner. Whenever it is desired and/or required to rotate the fish, the deflection device may simply be moved from the second position to the first position. This may prevent a redundant and/or superfluous operation of the handling system and/or the deflection device and/or may allow the deflection device to be selectively activated, i.e., to rotate the fish in the deflection device's first position, in a relatively simple, quick, and/or efficient manner.

The handling system may include at least one first drive device, preferably configured as a motor, for moving the deflection device between the first position and the second position.

As mentioned above, the handling system may be configured for handling whole fish. The term "whole fish", within the context of the present disclosure, is to be understood as a fish which has not, or only minimally, been processed by removing one or more portions of the fish. Preferably, the whole fish has only been processed by one of more of the following: bleeding out, at least partially gutting, and removing the head and/or the tail of the fish. A "whole fish" preferably excludes filleted fish. Thus, the "whole fish", for instance, may include fishbones and skin.

Preferably, the handling system and/or the deflection device is/are configured to rotate, i.e., flip, the fish to change or reverse or inverse a ventral side and a dorsal side of the fish.

The fish may be pre-sorted and/or pre-oriented, e.g., by manipulating the fish, prior to being received by the present handling system and/or prior to arriving at the first location. The fish may be arranged and/or may arrive at the first location in an orientation in which a ventral side or a dorsal side of the fish face a direction in which the fish is moved or movable along the support structure towards the opening and/or a direction in which the deflection device extends, preferably from an attachment point of the deflection device on a further structure (e.g., a wall) and/or a hinge of the deflection device, into the opening in the first position. For instance, the handling system and/or at least one processing station arranged upstream from the handling system, with respect to a direction in which the fish is movable along the support structure towards the opening, may be configured to arrange, e.g., manipulate, the fish into the above-mentioned orientation. This may facilitate rotating the fish about its longitudinal axis, at least with respect to the handling system described herein.

"Apply at least one force to the fish", within the context of the present disclosure, may mean that the deflection device is stationary, i.e., passive or non-moving, while the deflection device interacts with the fish, i.e., applies at least one force to the fish, to deflect at least a portion of the fish to cause the fish to rotate about the longitudinal axis of the fish. In other words, the force applied to the fish may be initiated and/or caused by a weight of the fish itself which is imparted onto the deflection device. Alternatively, the deflection device may be configured to move, e.g., towards the fish, while applying the force, e.g., by applying a force via a movement of the deflection device towards the fish.

The opening may have a number of different shapes and/or dimensions. Preferably, the opening is elongate, preferably in a direction which is substantially perpendicular to a direction in which the fish is moved along the support structure towards the opening and/or in a direction in which the deflection device extends, preferably from an attachment point of the deflection device on a further structure (e.g., a wall) and/or a hinge of the deflection device, into the opening in the first position. Preferably, the opening is slot-shaped.

The first location may be arranged higher than and/or above the second location, preferably along a vertical axis of the handling system and/or along the direction of gravity, when the handling system is in an operative position. The handling system may be configured such that the fish is dropped along and/or parallel to the vertical axis of the handling system and/or along the direction of gravity. Alternatively, the handling system may be configured such that the fish is dropped at an angle which is greater than 0° to the vertical axis of the handling system and/or along the direction of gravity. The handling system may be configured to allow the fish to drop from the first location to the second location at least along a section between the first location and the second location in a free-fall manner, i.e., without any structure of the handling system contacting the fish. Alternatively, or additionally, the handling system may be configured to guide, preferably slidably guide, the fish along a section between the first location and the second location, e.g., by allowing the fish to slide along a chute or the like in a section between the first location and the second location.

The first location and the second location may be distanced from each other, preferably along a vertical axis of the handling system, by a distance greater than zero, preferably a distance of at least 10 cm, more preferably a distance of at least 15 cm, more preferably a distance of at least 20 cm, more preferably a distance of at least 25 cm, more preferably a distance of at least 30 cm, more preferably a distance of at least 35 cm, more preferably a distance of at least 40 cm, more preferably a distance of at least 45 cm, more preferably a distance of at least 50 cm, more preferably a distance of at least 55 cm, more preferably a distance of at least 60 cm, more preferably a distance of at least 65 cm, more preferably a distance of at least 70 cm, more preferably a distance of at least 75 cm, more preferably a distance of at least 80 cm. Alternatively, or additionally, the first location and the second location may be distanced from each other, preferably along a vertical axis of the handling system, by a distance of no more than 120 cm, preferably no more than 115 cm, more preferably no more than 110 cm, more preferably no more than 105 cm, more preferably no more than 100 cm, more preferably no more than 95 cm, more preferably no more than 90 cm, more preferably no more than 85 cm, more preferably no more than 80 cm, more preferably no more than 75 cm, more preferably no more than 70 cm, more preferably no more than 65 cm, more preferably no more than 60 cm, more preferably no more than 55 cm, more preferably no more than 50 cm.

Preferably, the deflection device includes at least one edge, preferably at least one distal and/or free edge. The handling system and/or the deflection device may be configured such that, in the first position, the edge of the deflection device is arranged at least partially, preferably completely, in the opening. In other words, the deflection device may terminate, at least along the edge, within the opening. The edge may be configured to interact with the fish, when applying the force to the fish to rotate the fish.

Preferably, the deflection device is configured as a first door which is preferably rotatable about at least one first rotation axis to move the door between the first position and the second position. This may provide a relatively robust and simple configuration of the deflection device, i.e., with a relatively small number of parts. Moreover, configuring the deflection device as a door (i.e., the first door) may allow the door to provide a blocking function to partially block the opening, e.g., to prevent unwanted objects, e.g., from passing through the opening, or at least to reduce the risk thereof. The first door may be rotatably mounted to a mounting structure of the system, preferably along an edge, preferably a longitudinal edge, of the first door, e.g., such that the first rotation axis extends substantially along the edge of the first door.

Preferably, the handling system further includes at least one blocking device, preferably at least one second door, which is movable between a third position, in which the door at least partially blocks the opening to prevent the fish from passing through the opening, and a fourth position, in which the fish can pass through the opening. Preferably, the second door is rotatable about at least one second rotation axis to move the second door between the third position and the fourth position. Providing a further movable component, i.e., the blocking device, preferably second door, which is arrangeable into and retractable from the opening, in combination with the deflection device, may provide greater flexibility and/or further functions and/or effects, in particular by combining the deflection device and the blocking device, preferably second door, in different positions, as explained in further detail below. The first rotation axis and the second rotation axis may be substantially parallel.

The handling system may include at least one second drive device, preferably configured as a motor, for moving the blocking device or the second door between the third position and the fourth position.

The blocking device or second door may be rotatably mounted to a mounting structure of the system, preferably along an edge, preferably a longitudinal edge, of the blocking device or second door, e.g., such that the second rotation axis extends substantially along the edge of the blocking device or second door.

The term "block", within the context of "blocking" the opening according to the present disclosure, means to at least partially cover or at least partially occlude the opening.

Preferably, the first door and the second door are configured to be moved between the first position and the second position and between the third position and the fourth position, respectively, individually and/or simultaneously and/or separately. For instance, the first door and the second door may include separate drive devices, which may be actuated individually, for driving the first door and the second door.

Preferably, in the first position and the third position, respectively, the first door blocks a first section of the opening and the second door blocks a second section of the opening. Preferably, the second section is larger and/or extends along a longer distance of the opening than the first section. In other words, the second door may protrude further into the opening than the first door, when the first door is in first position and second door is in third position. This may allow the fish to be dropped through the opening, when the second door is in the fourth position, even when the first door is in the first position.

Preferably, the system is configured such that the second door is movable from the third position to the fourth position, to allow the fish to pass through the opening, and the first door is configured to remain in the first position, while the second door is in the fourth position, to apply the force to the fish by the first door to deflect at least a portion of the fish to cause the fish to rotate about the longitudinal axis of the fish, at least partially while the fish is dropping from the first location to the second location.

Preferably, the system is configured such that a center of gravity of the fish is arranged offset from the deflection device such that a gravitational force acting at the center of gravity of the fish does not pass through the deflection device, when the deflection device is in the first position and the fish is arranged at the first location. Preferably, the center of gravity of the fish is arranged above the second door, when the second door is in the third position. This may facilitate rotating the fish, in particular in a space-efficient and time-efficient manner.

Preferably, a distal edge of the deflecting device is arranged at a distance from a center of gravity of the fish, preferably when the fish is in the first location. Preferably, the distance extends parallel to a direction in which the fish is moved along the support structure towards the opening and/or along a direction which is substantially perpendicular to a direction in which the fish is dropped from the first location to the second location, of 1 cm to 30 cm, preferably 2.5 cm to 30 cm, more preferably 5 cm to 30 cm, more preferably 5 cm to 25 cm, more preferably 5 cm to 20 cm, when the deflection device is in the first position and the fish is arranged at the first location.

Preferably, the support structure is configured as a chute. Preferably, the chute is declined towards the opening in at least a section of the chute, preferably such that the fish is movable along the support structure towards or to the opening by gravitational forces, preferably only by gravitational forces.

Preferably, the deflection device and/or the second door is/are declined, preferably in a direction in which the fish is movable along the support structure towards the opening.

Preferably, the deflection device is configured to be stationary, while the deflection device applies the force to the fish in the first position.

Preferably, in the first position, the deflection device extends into the opening substantially perpendicularly to a direction in which the fish is dropped from the first location to the second location.

Preferably, in the first position, the deflection device extends into the opening by a distance of 5 cm to 25 cm, preferably 5 cm to 20 cm, more preferably 5 cm to 15 cm, more preferably 5 cm to 12.5 cm, more preferably 5 cm to 10 cm. The inventors have discovered that the distance by which the deflection device extends into the opening may determine a lever, in particular between an edge, in particular a distal edge, of the deflection device and the center of gravity of the fish, for generating a moment about the longitudinal axis of the fish in order to rotate the fish. Hence, a shorter distance by which the deflection device extends into the opening may provide a longer lever which may allow the fish to be rotated more quickly compared with a shorted lever. A quicker rotation may allow a distance between the first location and the second location, i.e., the distance by which the fish is/are dropped, to be reduced, e.g., to provide a more compact handling system. However, the inventors have discovered that, when the distance by which the deflection device extends into the opening is too small, the reliability of the deflecting device (with respect to its function of rotating the fish) may be reduced, e.g., in case a position and/or an orientation of the fish in the first location vary/varies from fish to fish. Thus, the inventors have discovered that the values provided above strike a good balance between the aspects mentioned above, in particular when using the handling system with different types of fish and/or fish of different sizes and/or at least for fish including salmon.

Preferably, the deflection device is configured to extend into the opening by a variable distance in the first position. In other words, the handling system, in particular the deflection device, may be configured to adjust the distance by which the deflection device extends into the opening in the first position, preferably during operation of the handling system. This may allow the deflection device to be dynamically adjustable and/or adaptable, in particular to different types of fish and/or different sizes of fish. This may, e.g., allow to adjust a lever, in particular between an edge, in particular a distal edge, of the deflection device and the center of gravity of the fish, for generating a moment about the longitudinal axis of the fish in order to rotate the fish, e.g., depending on one or more properties of the fish, e.g., one or more dimensions of the fish. Preferably, the handling system, in particular the deflection device, is configured to automatically adjust the distance by which the deflection device extends into the opening in the first position, e.g., by means of a control device, preferably by means of a control device coupled with one or more sensors. The one or more sensors may be configured to detect one or more properties of the fish, e.g., one or more dimensions of the fish and/or a type of fish, which may be used, e.g., by the control device, to determine or correlate with a target distance by which the deflection device extends into the opening in the first position. For instance, the one or more properties of the fish, e.g., one or more dimensions of the fish, may be one or more averaged values in one or more batches or groups of fish or one or more properties, e.g., one or more dimensions, of one or more fish, e.g., a single fish, e.g., each individual fish. The control device may be configured to, based on one or more signals generated by the one or more sensors, trigger an adjustment of the distance by which the deflection device extends into the opening in the first position.

Adjusting or adapting the distance by which the deflection device extends into the opening in the first position, as described above, may be achieved by one or more mechanisms and/or devices. For instance, the deflection device may have an adjustable length, e.g., the deflection device may have a plurality of structures which are movable relative to each other, e.g., by one or more actuators. Alternatively, or additionally, a mounting device, e.g., one or more hinges, which mounts the deflection device to a mounting structure, e.g., one or more sidewalls of the handling system, may be adjustable, e.g., extendable, to adjust or adapt the distance by which the deflection device extends into the opening in the first position.

The deflecting device or first door and the second door may each include a distal edge which extends into and within the opening, when the first door is in the first position and the second door is in the third position. The distal edge of the deflecting device or first door and the distal edge of the second door may be arranged adjacent to each other and/or may abut each other and/or may extend substantially parallel to each other, when the deflecting device or first door is in the first position and the second door is in the third position. A gap between the distal edge of the deflecting device or first door and the distal edge of the second door, when the first door is in the first position and the second door is in the third position, may extend from the distal edge of the deflecting device or first door to the distal edge of the second door by a distance of no more than 10 cm, preferably no more than 8 cm, more preferably no more than 6 cm, more preferably no more than 4 cm, more preferably no more than 2 cm. This may ensure enough tolerance, e.g., to avoid collision of the first door and the second door, while also preventing objects and/or debris from falling through the gap, or may at least reduce the risk thereof. Optionally, the above-described gap may be adjustable, in particular by configuring the handling system, in particular the deflection device and/or the second door, to adjust the distance by which the deflection device (or first door) and/or the second door extend(s) into the opening in the first position.

Preferably, the handling system further includes at least one detecting device, preferably at least one sensor, preferably at least one optical sensor, configured to detect the fish and/or at least one property of the fish and provide one or more signals based thereon, and further including at least one controller configured to trigger at least one operation of the system based on the one or more signals provided by the detecting device. This may allow an operation of the handling system, in particular of the deflecting device, to be at least partially automated.

Preferably, the detecting device is configured to detect presence of the fish and/or at least one property of the fish and provide a signal based thereon to the controller to trigger:
the opening to be closed to prevent the fish from passing though the opening; and/or
the opening to be opened to allow the fish to pass though the opening; and/or
movement of the deflection device from the first position to the second position and/or from the second position to the first position.

Preferably, the detecting device is configured to detect an orientation of the fish and provide a signal based on the detected orientation of the fish to the controller such that the controller can trigger the deflection device to move from the first position to the second position and/or from the second position to the first position depending on the detected orientation.

Preferably, the detecting device is configured to detect that a dorsal side or a ventral side of the fish is arranged on a downstream side of the fish, with respect to a direction in which the fish is moved along the support structure, and provide a signal to the controller based thereon, preferably to trigger the deflection device to move from the first position to the second position and/or from the second position to the first position.

Preferably, the deflection device is configured to be rotated between the first position and the second position.

The deflection device may be attached, preferably rotatably attached, to at least one attachment structure. For instance, the deflection device may be attached to the attachments structure via at least one hinge about which the deflection device may be rotated between the first position and the second position. The attachment structure may be arranged on a side of the opening which is opposite from the support structure and/or the second door and/or on one or more sidewalls.

Preferably, the handling system further includes at least one stopping structure configured to stop the fish from moving along the support structure in a position which is substantially above the opening and/or in the first location. This may enable the first location to be a pre-defined or pre-determined location, or at least within a certain range of a pre-defined or pre-determined location. This may allow variations in the position/location of the fish at the first location to be reduced. The stopping structure may extend from the deflection device, when the deflection device is in the first position, at angle (i.e., the angle is formed between the stopping structure and the deflection device) of no more than 170°, preferably no more than 150°, more preferably no more than 130°, more preferably no more than 110°, more preferably no more than 90°. Preferably, the angle is between 140° and 70°. The stopping structure may be configured as a wall, preferably a substantially vertical wall.

Preferably, the stopping structure is configured to stop the fish such that the fish rests at least partially on the deflection device and/or the second door, preferably when the fish is in the first location.

Preferably:
the deflecting device is arranged adjacent to the stopping structure; and/or
the deflecting device is attached to the stopping structure; and/or
the deflecting device is arranged between the stopping structure and the second door.

The deflecting device may be directly attached to the stopping structure (attachment structure). Alternatively, one or more intermediate components, such as one or more connecting elements, e.g., one or more bolts, one or more pins, etc.

Preferably, in the first position, the deflection device extends into the opening by a distance which is greater than in the second position. The deflection device may not extend into the opening at all in the second position, i.e., the distance by which the deflection device extends into the opening in the second position may be zero.

The present disclosure also relates to a fish processing system for processing fish. The fish processing system may include at least one processing station configured for processing the fish and at least one handling system according to any of the embodiments disclosed herein. Preferably, the processing station is arranged downstream from the handling system.

The term "processing", within the meaning of the present disclosure, means to alter, preferably plastically alter, a structure of the fish, e.g., by gutting, cutting, etc., the like.

Preferably, the fish processing system includes at least one conveying device, preferably at least one conveyor belt. The fish processing system may be configured such that the fish is dropped through the opening of the handling system, from the first location to the second location, onto the conveying device. Preferably, the conveying device is configured to convey the fish towards the processing station.

The object mentioned at the beginning is also achieved by a method of handling food items, preferably fish. The method may be performed by means of and/or with the aid of a handling system according to any of the embodiments disclosed herein.

The features, embodiments, and advantages, as detailed herein with respect to the handling system, apply to the method accordingly.

The steps of the method described herein are not limited to a particular sequence and may be performed in any technically feasible sequence.

The method may include:
placing at least one fish onto the support structure of the handling system to allow the fish to move towards the opening defined in the support structure.

The method may include:
setting the deflection device of the handling system in the first position such that the deflection device extends partially into the opening to apply at least one force to the fish to deflect at least a portion of the fish to cause the fish to rotate about a longitudinal axis of the fish, at least partially while the fish is dropping from the first location to the second location.

The term "setting" may mean that the deflection device is actively moved to the first position or that the deflection device is merely maintained in the first position.

Preferably, the method further includes:
setting the deflection device of the handling system in the second position, in which the deflection device is at least partially moved away from the opening, to allow the fish to pass through the opening to the second location without being rotated.

Preferably, the method further includes:
setting at least one door in a third position, in which the door at least partially blocks the opening to prevent the fish from passing through the opening, or a fourth position, in which the fish can pass through the opening.

Preferably, the method further includes:
detecting an orientation of the fish, by at least one detecting device, and triggering, by at least one controller, at least one operation of the system based on the detected orientation.

The following list of aspects provides preferred embodiments of the present disclosure:
1. A handling system for handling food items, preferably fish, preferably at least salmon, the handling system including:
   at least one support structure, preferably along which at least one fish is moveable, preferably wherein the support structure is configured to support the fish, as the fish is moving along the support structure;
   at least one opening defined in the support structure and configured to allow the fish to pass through the opening to be dropped from a first location on the support structure to a second location; and
   at least one deflection device which is movable between a first position and a second position, wherein, in the first position, the deflection device extends partially into the opening, preferably to apply at least one force to the fish, to deflect at least a portion of the fish to cause the fish to rotate, preferably about a longitudinal axis of the fish, preferably at least partially while the fish is dropping from the first location to the second location, and wherein, in the second position, the deflection device is at least partially moved away from the opening to allow the fish to pass through the opening to the second location without being rotated.
2. The handling system according to aspect 1, wherein the deflection device is configured as a first door which is preferably rotatable about at least one first rotation axis to move the door between the first position and the second position.
3. The handling system according to aspect 1 or 2, further including at least one blocking device, preferably at least one second door, which is movable between a third position, in which the door at least partially blocks the opening to prevent the fish from passing through the opening, and a fourth position, in which the fish can pass through the opening, preferably wherein the blocking device is rotatable about at least one second rotation axis to move the blocking device between the third position and the fourth position.
4. The handling system according to aspect 3, wherein the first door and the second door are configured to be moved between the first position and the second position and between the third position and the fourth position, respectively, individually and/or simultaneously and/or separately.
5. The handling system according to aspect 3 or 4, wherein, in the first position and the third position, respectively, the first door blocks a first section of the opening and the second door blocks a second section of the opening, wherein the second section is larger and/or extends along a longer distance of the opening than the first section.
6. The handling system according to any of aspects 3 to 5, wherein the system is configured such that the second door is movable from the third position to the fourth position, to allow the fish to pass through the opening, and the first door is configured to remain in the first position, while the second door is in the fourth position, to apply the force to the fish by the first door to deflect at least a portion of the fish to cause the fish to rotate about the longitudinal axis of the fish, at least partially while the fish is dropping from the first location to the second location.
7. The handling system according to any of the preceding aspects, wherein the system is configured such that a center of gravity of the fish is arranged offset from the deflection device such that a gravitational force acting at the center of gravity of the fish does not pass through the deflection device, when the deflection device is in the first position and the fish is arranged at the first location, preferably wherein the center of gravity of the fish is arranged above the second door, when the second door is the third position.
8. The handling system according to any of the preceding aspects, wherein a distal edge of the deflecting device is arranged at a distance from a center of gravity of the fish, preferably wherein the distance extends parallel to a direction in which the fish is moved along the support structure towards the opening and/or along a direction which is substantially perpendicular to a direction in which the fish is dropped from the first location to the second location, of 1 cm to 30 cm, preferably 2.5 cm to 30 cm, more preferably 5 cm to 30 cm, more preferably 5 cm to 25 cm, more preferably 5 cm to 20 cm, when the deflection device is in the first position and the fish is arranged at the first location.
9. The handling system according to any of the preceding aspects, wherein the support structure is configured as a chute, preferably wherein the chute is declined towards the opening in at least a section of the chute, preferably such that the fish is movable along the support structure towards or to the opening by gravitational forces, preferably only by gravitational forces.
10. The handling system according to any of the preceding aspects, wherein the deflection device and/or the second door is/are declined, preferably in a direction in which the fish is movable along the support structure towards the opening.
11. The handling system according to any of the preceding aspects, wherein the deflection device is configured to be stationary, while the deflection device applies the force to the fish in the first position.
12. The handling system according to any of the preceding aspects, wherein, in the first position, the deflection device extends into the opening substantially perpendicularly to a direction in which the fish is dropped from the first location to the second location.
13. The handling system according to any of the preceding aspects, wherein:
   in the first position, the deflection device extends into the opening by a distance of 5 cm to 25 cm, preferably 5 cm to 20 cm, more preferably 5 cm to 15 cm, more preferably 5 cm to 12.5 cm, more preferably 5 cm to 10 cm;
      and/or
   the deflection device is configured to extend into the opening by a variable distance in the first position.
14. The handling system according to any of the preceding aspects, further including at least one detecting device, preferably at least one sensor, preferably at least one optical sensor, configured to detect the fish and/or at least one property of the fish and provide one or more signals based thereon, and further including at least one controller configured to trigger at least one operation of the system based on the one or more signals provided by the detecting device.
15. The handling system according to aspect 14, wherein the detecting device is configured to detect presence of the fish and/or at least one property of the fish and provide a signal based thereon to the controller to trigger:
   the opening to be closed to prevent the fish from passing though the opening; and/or
   the opening to be opened to allow the fish to pass though the opening; and/or
   movement of the deflection device from the first position to the second position and/or from the second position to the first position.
16. The handling system according to aspect 14 or 15, wherein the detecting device is configured to detect an orientation of the fish and provide a signal based on the detected orientation of the fish to the controller such that the controller can trigger the deflection device to move from the first position to the second position and/or from the second position to the first position depending on the detected orientation.
17. The handling system according to any of aspects 14 to 16, wherein the detecting device is configured to detect that a dorsal side or a ventral side of the fish is arranged on a downstream side of the fish, with respect to a direction in which the fish is moved along the support structure, and provide a signal to the controller based thereon, wherein the controller is configured to trigger the deflection device to move from the first position to the second position and/or from the second position to the first position.
18. The handling system according to any of the preceding aspects, wherein the deflection device is configured to be rotated between the first position and the second position.
19. The handling system according to any of the preceding aspects, further including at least one stopping structure configured to stop the fish from moving along the support structure in a position which is substantially above the opening and/or in the first location.
20. The handling system according to aspect 19, wherein the stopping structure is configured to stop the fish such that the fish rests at least partially on the deflection device and/or the second door, preferably when the fish is in the first location.
21. The handling system according to aspect 19 or 20, wherein:
   the deflecting device is arranged adjacent to the stopping structure;
      and/or
   the deflecting device is attached to the stopping structure;
      and/or
   the deflecting device is arranged between the stopping structure and the second door.
22. The handling system according to any of the preceding aspects, wherein, in the first position, the deflection device extends into the opening by a distance which is greater than in the second position.
23. A fish processing system for processing fish, wherein the fish processing system includes at least one processing station configured for processing the fish and at least one handling system according to any of the preceding aspects, preferably wherein the processing station is arranged downstream from the handling system.
24. The fish processing system according to aspect 23, including at least one conveying device, preferably at least one conveyor belt, wherein the fish processing system is configured such that the fish is dropped through the opening of the handling system, from the first location to the second location, onto the conveying device, preferably wherein the conveying device is configured to convey the fish towards the processing station.
25. A method of handling food items, preferably fish, preferably at least salmon, preferably by means of a handling system according to any of aspects 1 to 22, the method including:
   placing at least one fish onto the support structure of the handling system, preferably to allow the fish to move towards the opening defined in the support structu re;
   setting the deflection device of the handling system in the first position such that the deflection device extends partially into the opening, preferably to apply at least one force to the fish, to deflect at least a portion of the fish to cause the fish to rotate, preferably about a longitudinal axis of the fish, preferably at least partially while the fish is dropping from the first location to the second location.
26. The method according to aspect 25, further including:
   setting the deflection device of the handling system in the second position, in which the deflection device is at least partially moved away from the opening, to allow the fish to pass through the opening to the second location without being rotated.
27. The method according to aspect 25 or 26, further including:
   setting at least one door in a third position, in which the door at least partially blocks the opening to prevent the fish from passing through the opening, or a fourth position, in which the fish can pass through the opening.
28. The method according to any of aspects 25 to 27, further including:
   detecting an orientation of the fish, by at least one detecting device, and triggering, by at least one controller, at least one operation of the system based on the detected orientation.

Preferred embodiments of the present invention are further elucidated below with reference to the figures. The described embodiments are merely exemplary and do not limit the present invention, as defined by the claims and their respective equivalents.
- Fig. 1: shows, in a schematic and perspective illustration, a handling system for handling fish according to an embodiment of the present disclosure, the handling system being in a first configuration;
- Fig. 2: shows, in a schematic and perspective illustration, the handling system of Fig. 1 in a second configuration;
- Fig. 3: shows, in a schematic and perspective illustration, the handling system of Figs. 1 and 2 in a third configuration;
- Figs. 4-7: show, in schematic and perspective illustrations, the handling system of Figs. 1 to 3 with a conveyor.

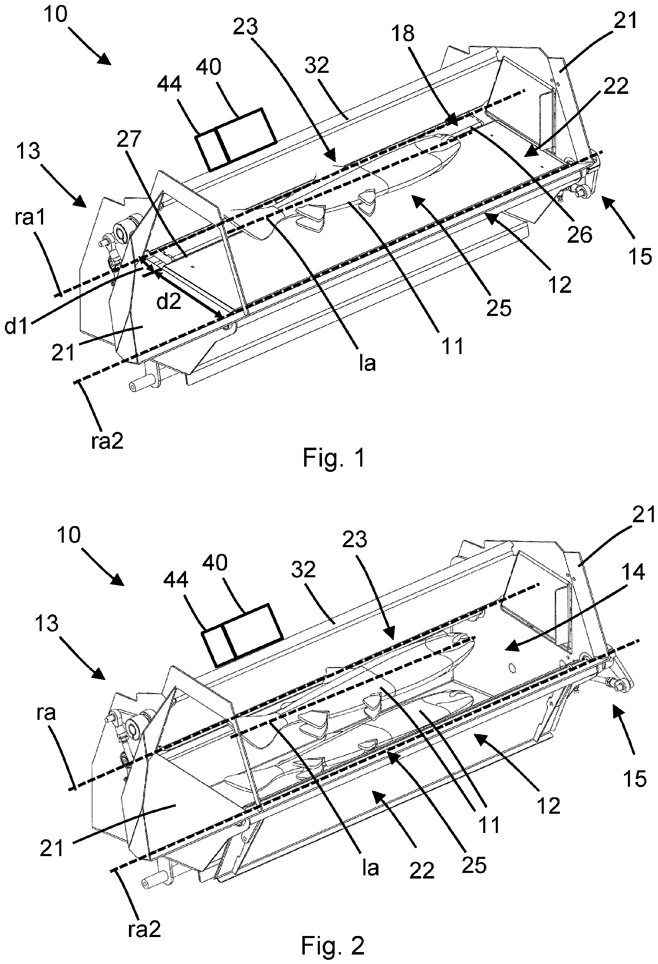

Figs. 1 to 3 show, in schematic and perspective illustrations, a handling system 10 for handling fish 11. The handling system 10 may include at least one support structure 12 configured to at least partially support, e.g., at least temporarily, the fish 11. The fish 11 may be moveable along the support structure 12. The fish 11 may be movable, e.g., slidable, along the support structure 12, relative to the support structure 12. The support structure 12 may be substantially stationary, while the fish 11 move(s) along the support structure 12. For instance, the support structure 12 may be configured as or may include a chute. Alternatively, or additionally, the support structure 12 may at least partially move in order to move/transport the fish along the support structure 12. For instance, the support structure 12 may be configured as or may include at least one conveyor. Alternatively, or additionally, at least one conveyor or at least one chute may be arranged upstream, with respect to a direction in which the fish 11 is moved in the system 10, from the handling system 10 and/or the support structure 12.

The handling system 10 may include at least one opening 14 defined in the support structure 12. The opening 14 may be configured, e.g., dimensioned and/or shaped, to allow the fish 11 to pass through the opening 14 to be dropped from a first location on the support structure 12 to a second location. The opening 14 is closed in Fig. 1 (the specifics of the opening and closing of the opening 14 are explained further below). Hence, the opening 14 is best seen in Fig. 2. Preferably, a chute is provided which is declined towards the opening 14 in at least a section of the chute, preferably such that the fish 11 is movable along the support structure 12 towards or to the opening 14 by gravitational forces, preferably only by gravitational forces. As mentioned above, the support structure 12 may include or may be configured as the chute.

The handling system 10 may include at least one deflection device 18 which is movable between a first position and a second position. In the first position, the deflection device 18 may extend partially into the opening 14 to apply at least one force to the fish 11 to deflect at least a portion of the fish 11, preferably to cause the fish 11 to rotate about a longitudinal axis la of the fish 11, preferably at least partially while the fish 11 is dropping from the first location to the second location. In the second position, the deflection device 18 may be at least partially moved away from the opening 14 to allow the fish 11 to pass through the opening 14 to the second location without being rotated.

The handling system 10 may include at least one first drive device 13, preferably configured as a motor, for moving the deflection device 18 between the first position and the second position.

The deflection device 18 may be configured as a door, preferably a first door of a plurality doors, which is preferably rotatable about at least one first rotation axis ra1 to move the door 18 between the first position and the second position. The deflection device 18 may be referred to a "door" or "first door" in the following. However, it is understood that said terms "door" or "first door" may also be exchanged by the term "deflection device" or vice versa.

The handling system 10 may include at least one second door 22 which is movable between a third position, in which the second door 22 at least partially blocks the opening 14 to prevent the fish 11 from passing through the opening 14, and a fourth position, in which the fish 11 can pass through the opening 14. The second door 22 may be rotatable about at least one second rotation axis ra2 to move the second door 22 between the third position and the fourth position.

The first rotation axis ra1 and the second rotation axis ra2 may be substantially parallel.

The handling system 10 may include at least one second drive device 15, preferably configured as a motor, for moving the second door 22 between the third position and the fourth position.

The first door 18 and the second door 22 may be configured to be moved between the first position and the second position and between the third position and the fourth position, respectively, individually and/or simultaneously and/or separately.

In the first position and the third position, respectively, the first door 18 may block a first section of the opening 14 and the second door 22 may block a second section of the opening 14. The second section may be larger and/or may extend along a longer distance of the opening 14 than the first section.

The first door 18 may extend into the opening 14 by a distance d1. The second door 22 may extend into the opening 14 by a distance d2 (see, e.g., Fig. 1).

The first door 18 may be configured to extend into the opening 14 by a variable distance d1 in the first position. In other words, the handling system 10, in particular the first door 18, may be configured to adjust the distance d1 by which the first door 18 extends into the opening 14 in the first position, preferably during operation of the handling system 10. This may allow the first door 18 to be dynamically adjustable and/or adaptable, in particular to different types of fish and/or different sizes of fish. Preferably, the handling system 10, in particular the first door 18, is configured to automatically adjust the distance d1 by which the first door 18 extends into the opening 14 in the first position, e.g., by means of a control device, e.g., the controller 44 described further below, which is preferably coupled with one or more sensors, e.g., the detecting device 40 described further below. The one or more sensors may be configured to detect one or more properties of the fish, e.g., one or more dimensions of the fish, which may be used, e.g., by the control device, to determine or correlate with a target distance d1 by which the first door 18 extends into the opening 14 in the first position. For instance, the one or more properties of the fish, e.g., one or more dimensions of the fish, may be one or more averaged values in one or more batches or groups of fish or one or more properties, e.g., one or more dimensions, of one or more fish, e.g., a single fish, e.g., each individual fish. The control device may be configured to, based on one or more signals generated by the one or more sensors, trigger an adjustment of the distance d1 by which the first door 18 extends into the opening 14 in the first position.

Adjusting or adapting the distance d1 by which the first door 18 extends into the opening 14 in the first position, as described above, may be achieved by one or more mechanisms. For instance, the first door 18 may have an adjustable length, e.g., the first door 18 may have a plurality of structures which are movable relative to each other, e.g., by one or more actuators. Alternatively, or additionally, a mounting device, e.g., one or more hinges, which mounts the first door 18 to a mounting structure, e.g., one or more sidewalls, e.g., the sidewalls 21 described further below, may be adjustable, e.g., extendable, to adjust or adapt the distance d1 by which the first door 18 extends into the opening 14 in the first position.

Alternatively, or additionally, the handling system 10, in particular the second door 22, may be configured such that the distance d2 by which the second door 22 extends into the opening 14 in the third position is variable and/or adjustable. The same mechanisms, as described above with respect to the first door 18, may apply to the second door 22.

The deflection device or first door 18 may be mounted, preferably rotatably mounted about the first rotation axis ra1, in or on at least one mounting structure. For instance, as shown in Figs. 1 to 3, the deflection device or first door 18 may be mounted, preferably rotatably mounted about the first rotation axis ra1, in sidewalls 21.

Fig. 1 shows a configuration in which the first door 18 is in the first position and the second door 22 is in the third position. Hence, the fish 11 is prevented from passing through the opening 14. Thus, as shown in Fig. 1, the fish 11 may rest on the first door 18 and/or the second door 22.

Fig. 2 shows a configuration in which the first door 18 is in the second position and the second door 22 is in the fourth position. Thus, the opening 14 is completely opened in Fig. 2 such that the fish 11 may pass through the opening 14. Such a combination of the first door 18 being in the second position and the second door 22 being in the fourth position may be desirable, e.g., if one or more fish 11 should be allowed to pass through the opening 14 without being rotated.

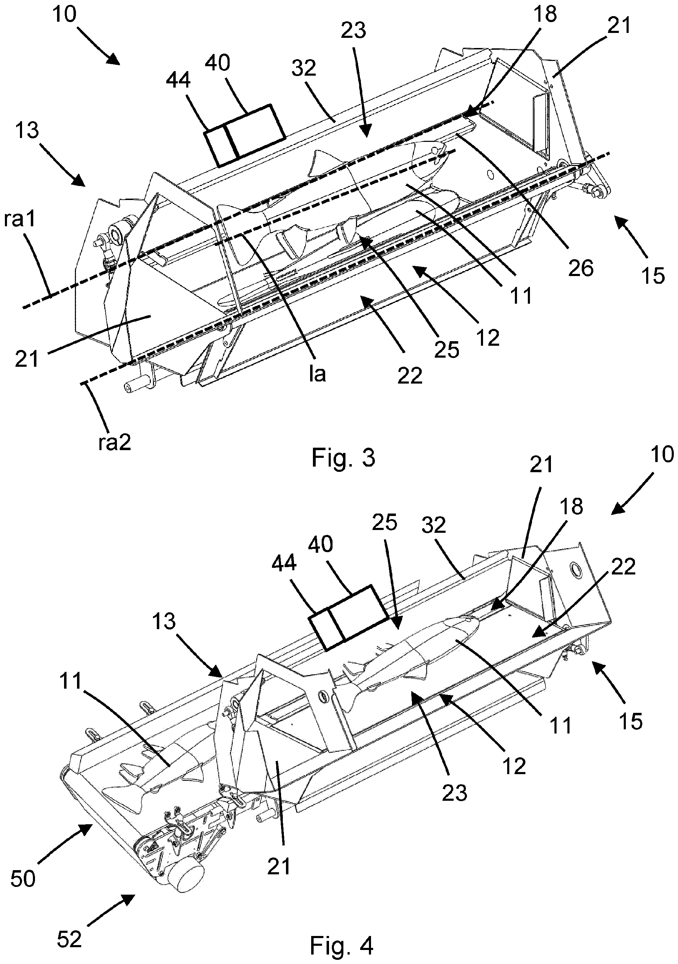

Fig. 3 shows a configuration in which the first door 18 is in the first position and the second door 22 is in the fourth position. Thus, the opening 14 may be opened by an extent which is large enough to allow the fish 11 to pass through the opening 14. However, since the first door 18 is in the first position in Fig. 3, the first door 18 may apply at least one force to the fish 11 to deflect at least a portion of the fish 11 to cause the fish 11 to rotate about the longitudinal axis la of the fish 11. Such a combination of the first door 18 being in the first position and the second door 22 being in the fourth position may be desirable, e.g., if one or more fish 11 should be allowed to pass through the opening 14 and should be rotated about their respective longitudinal axis la.

Rotating the fish 11 about the longitudinal axis la of the fish 11 may allow an orientation of a dorsal side 23 and a ventral side 25 of the side 11 to be changed, e.g., to a target orientation. In particular, an orientation of the dorsal side 23 and a ventral side 25 may be substantially switched. For instance, if the fish 11 arrive at the first location in a state in which the dorsal side 23 and the ventral side 25 of the fish 11 are not in a desired and/or target orientation, the first door 18 may be arranged in the first position and the second door 22 may be arranged in the fourth position such that the first door 18 may apply at least one force to the fish 11 to deflect at least a portion of the fish 11 to cause the fish 11 to rotate about the longitudinal axis la of the fish 11 such that the dorsal side 23 and a ventral side 25 may be substantially inverted or reversed.

The system 10 may be configured such that a center of gravity of the fish 11 is arranged offset from the deflection device or first door 18 such that a gravitational force acting at the center of gravity of the fish 11 does not pass through the deflection device or first door 18, when the deflection device or first door 18 is in the first position and the fish 11 is arranged at the first location. The center of gravity of the fish 11 may be arranged above the second door 22, when the second door 22 is the third position.

The deflecting device or first door 18 may include a distal edge 26. The distal edge 26 may be arranged at a distance from a center of gravity of the fish 11, when the deflection device or first door 18 is in the first position and the fish 11 is arranged at the first location. The distance may extend parallel to a direction in which the fish 11 is moved towards the opening 14 and/or along the support structure 12 and/or along a direction which is substantially perpendicular to a direction in which the fish 11 is dropped from the first location to the second location. The distance is preferably 1 cm to 30 cm, preferably 2.5 cm to 30 cm, more preferably 5 cm to 30 cm, more preferably 5 cm to 25 cm, more preferably 5 cm to 20 cm.

The second door 22 may include a distal edge 27. The distal edge 26 of the deflecting device or first door 18 and the distal edge 27 of the second door 22 may be arranged adjacent to each other and/or may abut each other and/or may extend substantially parallel to each other, when the deflecting device or first door 18 is in the first position and the second door 22 is in the third position.

The handling system 10 may include at least one stopping structure 32 configured to stop the fish 11 from moving along the support structure 12 in a position which is substantially above the opening 14 and/or in the first location. The stopping structure 32 may be configured to stop the fish 11 such that the fish 11 rests at least partially on the deflection device or first door 18 and/or the second door 22, preferably when the fish 11 is in the first location.

The handling system 10 may include at least one detecting device 40. The detecting device 40 may be configured as a sensor, preferably as an optical sensor. The detecting device 40 may be configured to detect the fish 11 and/or at least one property of the fish 11, e.g., an orientation of the fish 11, and provide one or more signals based thereon. The handling system 10 may include at least one controller 44 configured to trigger at least one operation of the system 10 based on the one or more signals provided by the detecting device 40.

The detecting device 40 is configured to detect presence of the fish 11 and/or at least one property of the fish 11 and provide a signal based thereon to the controller 44 to trigger:
the opening 14 to be closed to prevent the fish 11 from passing though the opening 14; and/or
the opening 14 to be opened to allow the fish 11 to pass though the opening 14;
   and/or
movement of the deflection device or first door 18 from the first position to the second position and/or from the second position to the first position.

The deflection device or first door 18 may be configured to detect an orientation of the fish 11 and provide a signal based on the detected orientation of the fish 11 to the controller 44 such that the controller 44 can trigger the deflection device or first door 18 to move from the first position to the second position and/or from the second position to the first position depending on the detected orientation.

The detecting device or first door 18 may be configured to detect that the dorsal side 23 or the ventral side 25 of the fish 11 is arranged on a downstream side of the fish 11, with respect to a direction in which the fish 11 is moved along the support structure 12, and provide a signal to the controller 44 based thereon. The controller 44 may be configured to trigger the deflection device 18 to move from the first position to the second position and/or from the second position to the first position.

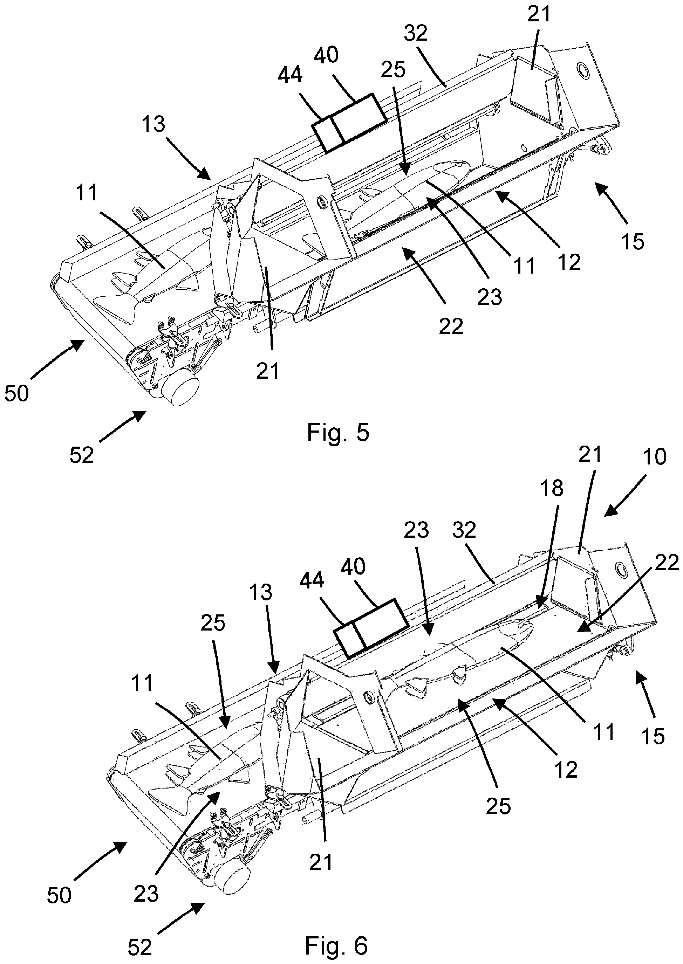

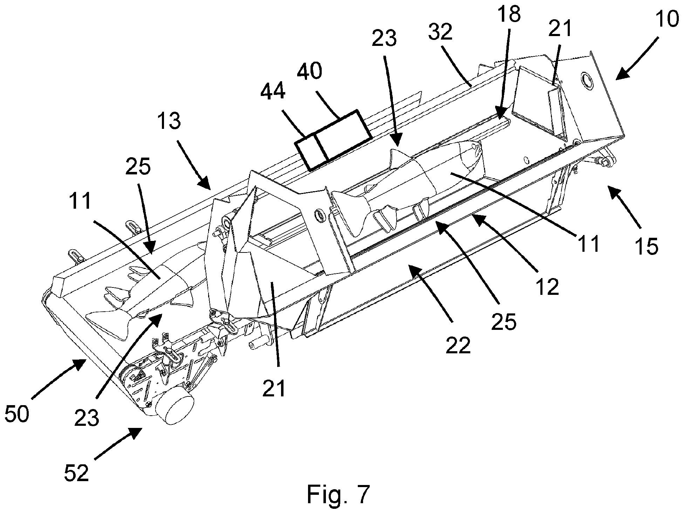

Figs. 4-7 show, in schematic and perspective illustrations, the handling system 10 of Figs. 1 to 3 with at least one conveyor 50. The conveyor 50 may be arranged downstream from the deflection device or first door 18

There may be provided at least one processing station (not shown) configured for processing the fish 11. The at least one processing station may be arranged upstream and/or downstream from the handling system 10. For instance, the conveyor 50 may be configured and/or arranged to transport the fish 11 to or towards the at least one processing station. The handling system 10 combined with the at least one processing station may be referred to as a fish processing system.

The fish processing system may be configured such that the fish 11 may be dropped through the opening 14 of the handling system 10, from the first location to the second location, onto the conveying device 50. The conveying device 50 may be configured to convey the fish 11 towards the processing station or a further processing station.

The conveyor 50 may include a drive apparatus 52 which may include at least one motor for driving the conveyor 50.

## Claims

1. A handling system (10) for handling fish (11), including:
at least one support structure (12) along which at least one fish is moveable, wherein the support structure (12) is configured to support the fish, as the fish is moving along the support structure (12);
at least one opening (14) defined in the support structure (12) and configured to allow the fish (11) to pass through the opening (14) to be dropped from a first location on the support structure (12) to a second location; and
at least one deflection device (18) which is movable between a first position and a second position, wherein, in the first position, the deflection device (18) extends partially into the opening (14) to apply at least one force to the fish (11) to deflect at least a portion of the fish (11) to cause the fish (11) to rotate about a longitudinal axis (Ia) of the fish (11), at least partially while the fish (11) is dropping from the first location to the second location, and wherein, in the second position, the deflection device (18) is at least partially moved away from the opening (14) to allow the fish (11) to pass through the opening (14) to the second location without being rotated.

2. The handling system (10) according to claim 1, wherein the deflection device (18) is configured as a first door (18) which is preferably rotatable about at least one first rotation axis (ra1) to move the door (18) between the first position and the second position.

3. The handling system (10) according to claim 2, further including at least one second door (22) which is movable between a third position, in which the second door (22) at least partially blocks the opening (14) to prevent the fish (11) from passing through the opening (14), and a fourth position, in which the fish (11) can pass through the opening (14), preferably wherein the second door (22) is rotatable about at least one second rotation axis (ra2) to move the second door (22) between the third position and the fourth position.

4. The handling system (10) according to claim 3, wherein, in the first position and the third position, respectively, the first door (18) blocks a first section of the opening (14) and the second door (22) blocks a second section of the opening (14), wherein the second section is larger and/or extends along a longer distance of the opening (14) than the first section.

5. The handling system (10) according to any of claims 3 to 4, wherein the system (10) is configured such that the second door (22) is movable from the third position to the fourth position, to allow the fish (11) to pass through the opening (14), and the first door (18) is configured to remain in the first position, while the second door (22) is in the fourth position, to apply the force to the fish (11) by the first door (18) to deflect at least a portion of the fish (11) to cause the fish (11) to rotate about the longitudinal axis (Ia) of the fish (11), at least partially while the fish (11) is dropping from the first location to the second location.

6. The handling system (10) according to any of the preceding claims, wherein the system (10) is configured such that a center of gravity of the fish (11) is arranged offset from the deflection device (18) such that a gravitational force acting at the center of gravity of the fish (11) does not pass through the deflection device (18), when the deflection device (18) is in the first position and the fish (11) is arranged at the first location, preferably wherein the center of gravity of the fish (11) is arranged above the second door (22), when the second door (22) is the third position.

7. The handling system (10) according to any of the preceding claims, wherein a distal edge (26) of the deflecting device (18) is arranged at a distance from a center of gravity of the fish (11), preferably wherein the distance extends parallel to a direction in which the fish (11) is moved along the support structure (12) towards the opening (14) and/or along a direction which is substantially perpendicular to a direction in which the fish (11) is dropped from the first location to the second location, of 1 cm to 30 cm, preferably 2.5 cm to 30 cm, more preferably 5 cm to 30 cm, more preferably 5 cm to 25 cm, more preferably 5 cm to 20 cm, when the deflection device (18) is in the first position and the fish (11) is arranged at the first location.

8. The handling system (10) according to any of the preceding claims, wherein the support structure (12) is configured as a chute, preferably wherein the chute is declined towards the opening (14) in at least a section of the chute, preferably such that the fish (11) is movable along the support structure (12) towards or to the opening (14) by gravitational forces, preferably only by gravitational forces.

9. The handling system (10) according to any of the preceding claims, wherein the deflection device (18) is configured to be stationary, while the deflection device (18) applies the force to the fish (11) in the first position.

10. The handling system (10) according to any of the preceding claims, wherein, in the first position, the deflection device (18) extends into the opening (14) substantially perpendicularly to a direction in which the fish (11) is dropped from the first location to the second location.

11. The handling system (10) according to any of the preceding claims, wherein:
in the first position, the deflection device (18) extends into the opening (14) by a distance (d1) of 5 cm to 25 cm, preferably 5 cm to 20 cm, more preferably 5 cm to 15 cm, more preferably 5 cm to 12.5 cm, more preferably 5 cm to 10 cm;
and/or
the deflection device (18) is configured to extend into the opening (14) by a variable distance (d1) in the first position.

12. The handling system (10) according to any of the preceding claims, wherein the deflection device (18) is configured to be rotated between the first position and the second position.

13. The handling system (10) according to any of the preceding claims, further including at least one stopping structure (32) configured to stop the fish (11) from moving along the support structure (12) in a position which is substantially above the opening (14) and/or in the first location.

14. The handling system (10) according to claim 19, wherein the stopping structure (32) is configured to stop the fish (11) such that the fish (11) rests at least partially on the deflection device (18) and/or the second door (22), preferably when the fish (11) is in the first location.

15. A method of handling fish by means of a handling system (10) according to any of claims 1 to 14, the method including:
placing at least one fish (11) onto the support structure (12) of the handling system (10) to allow the fish (11) to move towards the opening (14) defined in the support structure (12);
setting the deflection device (18) of the handling system (10) in the first position such that the deflection device (18) extends partially into the opening (14) to apply at least one force to the fish (11) to deflect at least a portion of the fish (11) to cause the fish (11) to rotate about a longitudinal axis (Ia) of the fish (11), at least partially while the fish (11) is dropping from the first location to the second location.
